(19) Europäisches Patentamt
European Patent Office
Office européen des brevets

(11) EP 4 644 973 A1

(12) EUROPEAN PATENT APPLICATION
published in accordance with Art. 153(4) EPC

(43) Date of publication:
05.11.2025 Bulletin 2025/45

(51) International Patent Classification (IPC):
G02B 30/56 (2020.01)          G09F 9/00 (2006.01)
H04N 13/346 (2018.01)         H04N 13/361 (2018.01)

(21) Application number: 23911717.9

(22) Date of filing: 13.12.2023

(52) Cooperative Patent Classification (CPC):
G02B 30/56; G09F 9/00; H04N 13/346;
H04N 13/361

(86) International application number:
PCT/JP2023/044629

(87) International publication number:
WO 2024/142936 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.12.2022 JP 2022210875

(71) Applicant: Kyocera Corporation
Kyoto-shi, Kyoto 612-8501 (JP)

(72) Inventor: SHIMOSE, Kazuki
Kyoto-shi, Kyoto 612-8501 (JP)

(74) Representative: TBK
Bavariaring 4-6
80336 München (DE)

(54) AERIAL IMAGE DISPLAY DEVICE

(57) An aerial image display device includes a display and at least one optical system. The display includes a first display unit that emits first image light and a second display unit that emits second image light. The at least one optical system forms a first aerial image as a real image from the first image light and forms a second aerial image as a real image from the second image light. The second aerial image is closer to a user than the first aerial image. The first aerial image and the second aerial image overlap each other in a field of view of the user.

FIG. 1

**Description**

TECHNICAL FIELD

The present disclosure relates to an aerial image display device.

BACKGROUND OF INVENTION

A known aerial image display device is described in, for example, Patent Literature 1.

CITATION LIST

PATENT LITERATURE

Patent Literature 1: Japanese Unexamined Patent Application Publication No. 2001-125506

SUMMARY

In an aspect of the present disclosure, an aerial image display device includes a display and at least one optical system. The display includes a first display unit that emits first image light and a second display unit that emits second image light. The at least one optical system forms a first aerial image as a real image from the first image light and forms a second aerial image as a real image from the second image light. The second aerial image is closer to a user than the first aerial image. The first aerial image and the second aerial image overlap each other in a field of view of the user.

BRIEF DESCRIPTION OF THE DRAWINGS

The objects, features, and advantages of the present disclosure will become more apparent from the following detailed description and the drawings.

FIG. 1 is a cross-sectional view of an example of an aerial image display device according to one embodiment of the present disclosure, illustrating its main components.
FIG. 2 is a cross-sectional view of another example of the aerial image display device in FIG. 1, illustrating its main components.
FIG. 3 is a front view of an example of an aerial image viewed by a user of the aerial image display device in FIG. 1.
FIG. 4 is a cross-sectional view of a first concave mirror, describing its curvature.
FIG. 5 is a cross-sectional view of an example of an aerial image display device according to another embodiment of the present disclosure, illustrating its main components.
FIG. 6 is a cross-sectional view of another example of the aerial image display device in FIG. 5, illustrating its main components.
FIG. 7 is a cross-sectional view of an example of an aerial image display device according to another embodiment of the present disclosure, illustrating its main components.
FIG. 8 is a front view of an example of an aerial image viewed by the user of the aerial image display device in FIG. 7.
FIG. 9 is a partial cross-sectional view of an aerial image of a contactless input device using the aerial image display device according to one or more embodiments of the present disclosure.

DESCRIPTION OF EMBODIMENTS

Patent Literature 1 describes an aerial image display device including optical elements such as a beam splitter, a polarizing plate, and a quarter-wave plate and multiple display units to allow a user to view a planar image and a stereoscopic image overlapping each other. The known aerial image display device includes the optical elements such as the beam splitter, the polarizing plate, and the quarter-wave plate, and thus generates transmitted light components that are transmitted based on the polarization direction and blocked light components that are blocked based on the polarization direction. This can easily lower the luminance of the planar image and the luminance of the stereoscopic image. Such a known aerial image display device is thus to be improved for a user to view an image with high viewability.

One or more embodiments of the present disclosure will now be described with reference to the drawings. The drawings used herein illustrate the main components of an aerial image display device according to one or more embodiments of the present disclosure. The display device according to one or more embodiments may include known components that are not illustrated, such as a housing and an optical system support. The drawings used herein are schematic and are not necessarily drawn to scale relative to the actual size of each component.

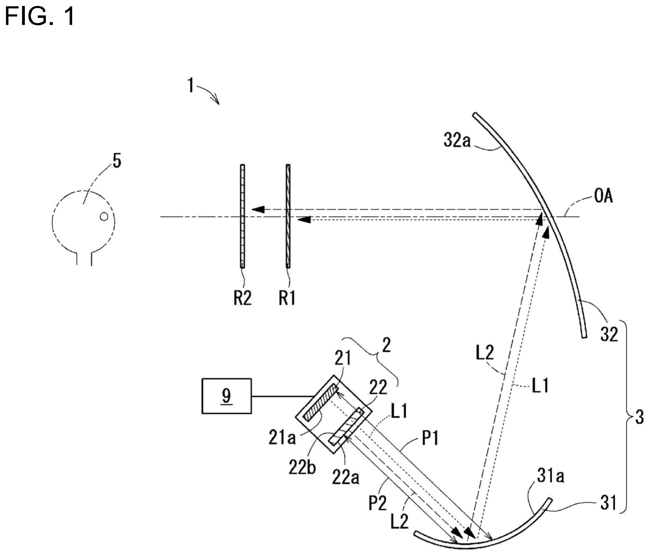

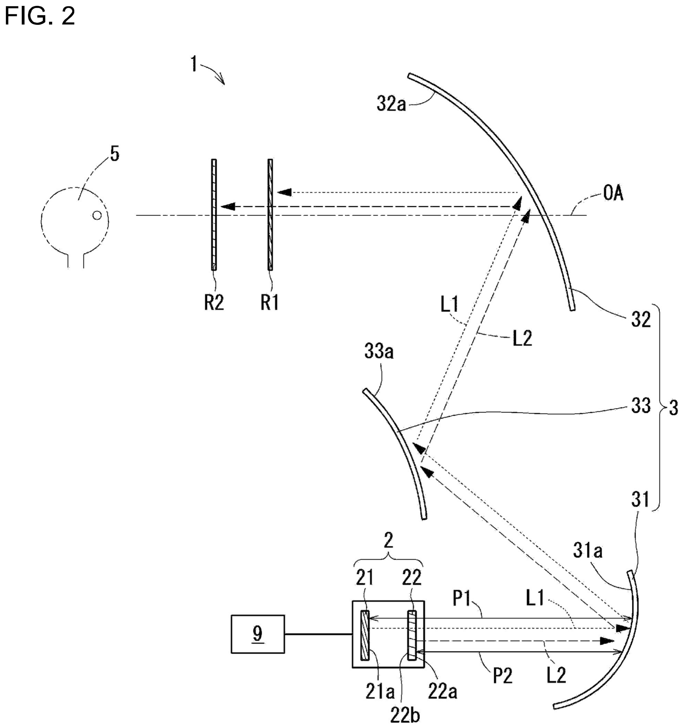

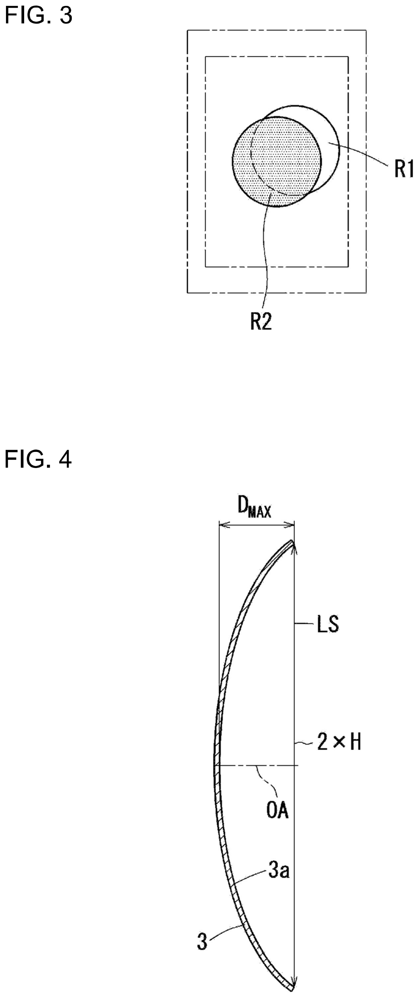

FIG. 1 is a cross-sectional view of an aerial image display device according to one embodiment of the present disclosure, illustrating its main components. FIG. 2 is a cross-sectional view of another example of the aerial image display device in FIG. 1, illustrating its main components. FIG. 3 is a front view of an example of an aerial image viewed by a user of the aerial image display device in FIG. 1. FIG. 4 is a cross-sectional view of a first concave mirror, describing its curvature.

In the present embodiment, an aerial image display device 1 includes a display 2 and at least one optical system 3. The display 2 includes a first display unit 21 and a second display unit 22.

The first display unit 21 emits first image light L1. The second display unit 22 emits second image light L2. The at least one optical system 3 forms a first aerial image R1 as a real image from the first image light L1 and a second aerial image R2 as a real image from the second image light L2. For example, a single optical system 3 may form the first aerial image R1 and the second aerial image R2. Two separate optical systems may be available, or specifically, a first optical system forming the first aerial image R1 and a second optical system independent of the first optical system and forming the second aerial image R2. The optical system 3 may be a reflective optical system including reflective mirrors, or may include reflective mirrors and a condenser (e.g., a condenser lens such as a Fresnel lens). The optical system 3 may include reflective mirrors and a holographic element.

The second aerial image R2 is closer to a user 5 than the first aerial image R1. The first aerial image R1 and the second aerial image R2 overlap each other in the field of view of the user 5. In other words, the first aerial image R1 and the second aerial image R2 are at different positions in an optical axis direction of final image forming light for the first aerial image R1 and the second aerial image R2 (image forming light between a second concave mirror 32 and the user 5), and overlap each other in the field of view of the user 5. In this structure, the aerial image display device 1 allows the user 5 to view the second aerial image R2 located in a front area frontward from the first aerial image R1 (closer to the user 5). This improves the sense of depth of the aerial image and the sense of floating that causes the aerial image to appear floating in the space.

When, for example, the user 5 views the first aerial image R1 and the second aerial image R2 from the front, the first aerial image R1 and the second aerial image R2 may fully overlap each other in the field of view of the user 5. When the user 5 views the first aerial image R1 and the second aerial image R2 in a direction other than from the front, the first aerial image R1 and the second aerial image R2 may partially overlap each other in the field of view of the user 5. When the user 5 views the first aerial image R1 and the second aerial image R2 from the front, the first aerial image R1 and the second aerial image R2 may partially overlap each other in the field of view of the user 5. When the user 5 views the first aerial image R1 and the second aerial image R2 in a direction other than from the front, the first aerial image R1 and the second aerial image R2 may fully overlap each other in the field of view of the user 5.

The display 2 may have the length of a first optical path P1 from the first display unit 21 to the optical system 3 different from the length of a second optical path P2 from the second display unit 22 to the optical system 3. In this case, the length of an optical path from the first display unit 21 to the first aerial image R1 (also referred to as a full length of an image forming optical path) is substantially the same as the length of an optical path from the second display unit 22 to the second aerial image R2. This easily allows the first aerial image R1 and the second aerial image R2 to be at different positions in the respective optical axis directions.

When an optical system for forming the first aerial image R1 (also referred to as a first optical system) and an optical system for forming the second aerial image R2 (also referred to as a second optical system) are separate from each other and the first optical system has a full length of the image forming optical path different from that of the second optical system, the length of the first optical path P1 from the first display unit 21 to the first optical system may be the same as the length of the second optical path P2 from the second display unit 22 to the second optical system.

The length of the first optical path P1 can be determined as described below. For example, when light emitted from a center point (also referred to as a center emission point) of a display surface 21a of the first display unit 21 in a direction perpendicular to the display surface 21a reaches an end point on a first concave mirror 31, the length of the first optical path P1 may be a distance between the center emission point and the end point. For the display surface 21a being rectangular, the center point of the display surface 21a may be the intersection of the two diagonals. For the display surface 21a being circular, the center point of the display surface 21a may be a center point of the diameter. For the display surface 21a being elliptic, the center point may be the intersection between the major axis and the minor axis. The center point of the display surface 21a may be a geometric center point of the display surface 21a. Light beams are emitted in the direction perpendicular to the display surface 21a from multiple emission points (e.g., 10 to 1000 emission points) distributed at equal intervals over the entire surface of the display surface 21a of the first display unit 21, and reach respective end points on the first concave mirror 31. In this structure, the length of the first optical path P1 may be an average length of the distances between the multiple emission points and the respective end points on the first concave mirror 31. The length of the second optical path P2 can also be determined in the same or a similar manner as described above.

Of the first aerial image R1 and the second aerial image R2, the image closer to the user 5 (e.g., the second aerial image R2 illustrated in FIG. 1) may be at a spatial position in a front area spaced from the center point of the second concave mirror 32 by about 30 to 100 cm. Of the first aerial image R1 and the second aerial image R2, the image farther from the user 5 (e.g., the first aerial image R1 illustrated in FIG. 1) may be at a spatial position in a rear area spaced from the center point of the second concave mirror 32 by about 5 to 95 cm. The distance between the spatial position in the rear area and the center point of the second concave mirror 32 is, but not limited to, about 20 to 80% or about 30 to 70% of the distance between the spatial position in the front area and the center point of the second concave mirror 32. The center point of the second concave mirror 32 may be a geometric center point of the second concave mirror 32 in a front view, for example. For the second concave mirror 32 being rectangular in a front view, for example, the center point of the second concave mirror 32 may be the intersection of the two diagonal lines. For the second concave mirror 32 being a freeform concave mirror, the center point of the second concave mirror 32 may be a center point (the start of an XY polynomial surface) of a reflective surface 31a represented by the XY polynomial surface (described later) as illustrated in FIG. 4. Note that a range of values referred to herein as one value to another value intends to mean the two values being inclusive.

The spatial position of the second aerial image R2 in the front area (also referred to as an image forming position) can be identified as described below. A light-transmissive screen is placed to include its display surface at a position perpendicular to the optical axis direction of the image forming light of the second aerial image R2 between the second aerial image R2 and the second concave mirror 32. The light-transmissive screen diffuses image light projected from outside to display an image. When the light-transmissive screen is moved in the optical axis direction, a spatial position at which a clear image is displayed on the light-transmissive screen may be defined as an image forming position of the second aerial image R2 in the front area. The light-transmissive screen may be, for example, Kaleido Screen (registered trademark) manufactured by ENEOS Corporation.

The image forming position of the second aerial image R2 in the front area may also be identified with a method described below. A side plate in a casing of the aerial image display device 1 is removed. The configuration of the optical system in the internal space is transferred to a computer-aided design (CAD) drawing. The transfer may be performed based on the photograph of the optical system configuration or may be performed using a laser light 3D scanner. A computer then reads the 3D coordinates of the optical system based on the CAD drawing of the optical system configuration. Finally, the computer performs ray tracing for the optical system to identify the image forming position of the second aerial image R2 in the front area.

An image forming position of the first aerial image R1 in the rear area can also be identified with the same or a similar manner as described above.

The first aerial image R1 and the second aerial image R2 may have different sizes when viewed from the user 5. For example, the first aerial image R1 in the rear area may be a background image such as a landscape, and the second aerial image R2 in the front area may be an image of a specific object such as a person, an animal, or a character. In this case, the first aerial image R1 may be larger than the second aerial image R2. Note that, more specifically, the first aerial image R1 is larger than the second aerial image R2 in the field of view of the user 5. In this case, the user 5 can view the aerial images R1 and R2 including the specific object (second aerial image R2) floating in the background image (first aerial image R1). This improves the sense of floating of the second aerial image R2. The size of each aerial image is the size of the corresponding image forming area in which the image light forms an image. More specifically, the size of the first aerial image R1 is the size of the image forming area in which the first image light L1 forms an image in a space in front of the eyes of the user 5, and the size of the second aerial image R2 is the size of the image forming area in which the second image light L2 forms an image in a space in front of the eyes of the user 5. When, for example, the first aerial image R1 is a landscape, the image forming area of the first aerial image R1 corresponds to an area occupied by the landscape. When, for example, the second aerial image R2 is a person, the image forming area of the second aerial image R2 corresponds to an area occupied by the person. The size of the first aerial image R1 may be an area size of a front portion, directly facing the user 5, of the image forming area of the first aerial image R1. The size of the second aerial image R2 may be defined in the same or a similar manner. The size of the first aerial image R1 may be, but not limited to, more than one times and about ten times or less the size of the second aerial image R2.

For example, the first aerial image R1 in the rear area may be an image of a specific object, and the second aerial image R2 in the front area may be an image of the same or a similar specific object. In this case, the first aerial image R1 may be smaller than the second aerial image R2. In this case, the first aerial image R1 farther from the user 5 than the second aerial image R2 is smaller than the second aerial image R2 when viewed from the user 5. This allows the user 5 to have depth perception and thus improves the sense of floating of the second aerial image R2. The size of the first aerial image R1 may be, but not limited to, about one-tenth times or more and less than one times the size of the second aerial image R2.

The size difference between the first aerial image R1 and the second aerial image R2 are achieved with means for adjusting the image forming area of the aerial image (also referred to as first means) as described above. When, for example, the first aerial image R1 and the second aerial image R2 have the same size, the apparent size difference between the first aerial image R1 and the second aerial image R2 may be achieved with, other than with the first means, means for causing the first aerial image R1 and the second aerial image R2 to have different distances to the user 5 (also referred to as second means). The first means and the second means may be used in combination.

In the aerial image display device 1, the second aerial image R2 may have higher luminance than the first aerial image R1. In this case, the first aerial image R1 is more likely to be viewed as the background image of the second aerial image R2, and the second aerial image R2 is more likely to be viewed with the eyes of the user 5 as further popping up toward the user 5. The luminance of the second aerial image R2 may be, but not limited to, more than one times and about ten times or less the luminance of the first aerial image R1.

In the aerial image display device 1, the second aerial image R2 may have a higher grayscale than the first aerial image R1, or more specifically, the second aerial image R2 may be an image with a high grayscale and the first aerial image R1 may be an image with a low grayscale. In this case, the second aerial image R2 is more likely to be viewed with the eyes of the user 5 as further popping up toward the user 5. The grayscale of the second aerial image R2 may be, but not limited to, more than one times and about 20 times or less the grayscale of the first aerial image R1.

In the aerial image display device 1, the second aerial image R2 may have a higher resolution than the first aerial image R1. In this case, the second aerial image R2 is more likely to be viewed with the eyes of the user 5 as further popping up toward the user 5. The resolution of an image can be expressed using the modulation transfer function (MTF). The MTF can be used as a resolution index for comparing the resolutions of images. The MTF is a function of a spatial frequency $\nu$ (1/mm), and is maximum at $\nu = 0$. The MTF may be normalized to a maximum value of 1. In this case, an MTF value closer to 1 indicates a higher resolution. Note that an area size obtained by integrating the MTF at the spatial frequency axis (also referred to as an MTF area size) may be used as a performance index of an image to allow highly accurate evaluation of the resolution of an image. The resolution of the second aerial image R2 (e.g., the MTF area size) may be, but not limited to, more than one times and about five times or less the resolution of the first aerial image R1 (e.g., the MTF area size).

In the aerial image display device 1, the second aerial image R2 and the first aerial image R1 may be videos. In this case, the second aerial image R2 may have a higher moving speed than the first aerial image R1. In this case, the second aerial image R2 is more likely to be viewed with the eyes of the user 5 as being closer to the user 5 than the first aerial image R1. The moving speed of the second aerial image R2 may be, but not limited to, more than one times or about ten times or less the moving speed of the first aerial image R1.

The aerial image display device 1 may include a detector (e.g., an imaging device such as a camera) that detects a gaze direction of the eyes of the user 5 and a controller for controlling control variables that improve at least one control variable of the luminance, the grayscale, the resolution, or the moving speed of the second aerial image R2 in response to the detector detecting the line of sight of the eyes of the user 5 being directed to the second aerial image R2. In this case, the second aerial image R2 is more noticeable than the first aerial image R1 when the user 5 gazes at the second aerial image R2. Thus, the second aerial image R2 is more likely to be viewed as further popping up toward the user 5. The controller for controlling the control variables may be included in a control device 9 or may be separate from the control device 9.

The first display unit 21 includes the first display surface 21a. The first display unit 21 displays an image with propagating first image light L1 on the first display surface 21a. In other words, the first display unit 21 emits the first image light L1 from the first display surface 21a. The second display unit 22 includes a second display surface 22a and a rear surface 22b opposite the second display surface 22a. The second display unit 22 displays an image with propagating second image light L2 on the second display surface 22a. In other words, the second display unit 22 emits the second image light L2 from the second display surface 22a. The first display surface 21a and the second display surface 22a may be, for example, triangular, rectangular, circular, or in any other shape. The first display surface 21a and the second display surface 22a may have the same shape or different shapes. The first image light L1 and the second image light L2 may be hereafter referred to as image light L1 and image light L2. An image displayed on the first display surface 21a may be referred to as a first image. An image displayed on the second display surface 22a may be referred to as a second image.

The first display surface 21a and the second display surface 22a may have different sizes. The first display surface 21a located at a relatively long distance from the optical system 3 may be larger than the second display surface 22a located at a relatively short distance from the optical system 3. In this case, the first aerial image R1 relatively distant from the user 5 is larger than the second aerial image R2 relatively close to the user 5. This allows the user 5 to view more clearly the second aerial image R2 located closer to the user 5 than the first aerial image R1, improving a sense of floating that causes the second aerial image R2 to appear floating in a space with the first aerial image R1. This further improves the sense of depth and the sense of floating of the aerial image. The size of the first display surface 21a may be, but not limited to, more than one times and about two times or less, or more than 1.1 times and about 1.5 times or less the size of the second display surface 22a.

The first image light L1 emitted from the first display surface 21a located at a relatively long distance from the optical system 3 may have higher luminance than the second image light L2 emitted from the second display surface 22a located at a relatively short distance from the optical system 3. In this case, the second aerial image R2 relatively close to the user 5 has higher luminance than the first aerial image R1 relatively distant from the user 5, thus allowing the user 5 to clearly view the second aerial image R2 located closer to the user 5 than the first aerial image R1. This further improves the sense of depth of the aerial image and the sense of floating that causes the aerial image to appear floating in the space. The luminance of the first image light L1 may be average luminance of the first display surface 21a. The luminance of the second image light L2 may be average luminance of the second display surface 22a. The luminance of the first image light L1 may be, but not limited to, more than one times and about ten times or less, or more than 1.5 times and about five times or less the luminance of the second image light L2.

The first display unit 21 includes the first display surface 21a located adjacent to the rear surface 22b of the second display unit 22 to face the rear surface 22b of the second display unit 22. The first display unit 21 emits the first image light L1 toward the rear surface 22b of the second display unit 22. In the display 2, the first image light L1 has a propagation direction (also referred to as a first optical axis direction) substantially parallel to a propagation direction (also referred to as a second optical axis direction) of the second image light L2.

The first display unit 21 may be a transmissive display. The transmissive display may be, for example, a liquid crystal display including a backlight and a liquid crystal panel. The backlight may be a direct backlight including multiple light sources arranged two-dimensionally on a rear surface of the liquid crystal panel. The backlight may be an edge-lit backlight including multiple light sources arranged on an outer periphery of the liquid crystal panel. The edge-lit backlight may include, for example, a lens array, a light guide plate, or a diffuser plate for uniformly illuminating the liquid crystal panel. The light sources in the backlight may be, for example, light-emitting diode (LED) elements, cold cathode fluorescent lamps, halogen lamps, or xenon lamps. The LED elements used as light sources include mini-LED elements and micro-LED elements. The liquid crystal panel may have a known structure. Examples of the known liquid crystal panel include an in-plane switching (IPS) panel, a fringe field switching (FFS) panel, a vertical alignment (VA) panel, and an electrically controlled birefringence (ECB) panel.

The transmissive display is not limited to a liquid crystal display. The transmissive display may be, for example, a micro-electromechanical systems (MEMS) shutter display including a backlight and a MEMS shutter.

The first display unit 21 is not limited to the transmissive display. The first display unit 21 may be a self-luminous display including multiple self-luminous elements such as LED elements, organic electroluminescent (OEL) elements, organic LED (OLED) elements, or semiconductor laser diode (LD) elements. The LED elements may be micro-LEDs.

The first display unit 21 may include a transparent substrate made of a transparent material such as a glass material and a transparent display including multiple self-luminous elements. The multiple luminous elements may be arranged on the transparent substrate or received in the respective multiple recesses on the transparent substrate.

The second display unit 22 is a transparent display. The second display unit 22 emits the second image light L2 and transmits part of the first image light L1. The second display unit 22 may transmit the first image light L1 with a transmittance of about 40 to 80%.

The first image light L1 emitted from the first display unit 21 is transmitted through the second display unit 22 and travels toward the first concave mirror 31 in the optical system 3. The second image light L2 emitted from the second display unit 22 travels directly toward the first concave mirror 31 in the optical system 3. In other words, the display 2 has the length of the first optical path P1 from the first display unit 21 to the optical system 3 different from the length of the second optical path P2 from the second display unit 22 to the optical system 3.

The optical system 3 forms the first aerial image R1 as a real image from the first image light L1 and the second aerial image R2 as a real image from the second image light L2 emitted from the second display unit 22.

The optical system 3 forms, based on the difference in optical path length between the first optical path P1 and the second optical path P2, the first aerial image R1 and the second aerial image R2 at different positions in the first optical axis direction and the second optical axis direction. As illustrated in FIGs. 1 and 2, the first aerial image R1 and the second aerial image R2 are at different positions in a direction along an optical axis OA (the first optical axis direction and the second optical axis direction) of the first image light L1 from the optical system 3 (the second concave mirror 32) to the first aerial image R1 and the second image light L2 from the optical system 3 to the second aerial image R2. The direction along the optical axis OA from the optical system 3 may be substantially aligned with the gaze direction of the user 5. The first aerial image R1 and the second aerial image R2 overlap each other when viewed in the direction along the optical axis OA. The optical system 3 is configured to cause the first aerial image R1 and the second aerial image R2 to be at different positions and overlap each other in the field of view of the user 5. The first aerial image R1 and the second aerial image R2 may be hereafter collectively referred to as aerial images R1 and R2.

The aerial image display device 1 is configured to cause the first aerial image R1 to be located farther from the second aerial image R2 when viewed from the user 5 in the direction along the optical axis OA. The aerial image display device 1 allows the user 5 to view a superimposed image (aerial images R1 and R2) optically matched with each other as illustrated in FIG. 3 by using the second aerial image R2 having higher luminance than the first aerial image R1. In the aerial image display device 1, the first image light L1 emitted from the first display unit 21 is partially transmitted through the second display unit 22 to reach the optical system 3. Although the first image light L1 has the same luminance as the second image light L2, the luminance of the first image light L1 decreases in this structure. The second aerial image R2 can thus have higher luminance than the first aerial image R1 without the luminance adjustment of an image displayed on the first display surface 21a and an image displayed on the second display surface 22a. The aerial image display device 1 allows the user 5 to view, using the display 2 with the simple structure, the aerial images R1 and R2 with a higher sense of depth and a higher sense of floating.

In the aerial image display device 1, the first aerial image R1 and the second aerial image R2 are at different positions in the direction along the optical axis OA. The aerial image display device 1 can thus provide motion parallax between the first aerial image R1 and the second aerial image R2. More specifically, the second aerial image R2 is moved by a greater distance than the first aerial image R1 as the line of sight of the user 5 moves. Thus, the aerial image display device 1 can provide the sense of floating to the second aerial image R2 closer to the user 5 than the first aerial image R1 when viewed from the user 5, and can provide the sense of depth to the aerial images R1 and R2.

As described above, the first display surface 21a may be larger than the second display surface 22a. In this case, the first aerial image R1 can be larger than the second aerial image R2 in the field of view of the user 5. This allows, for example, the user 5 to view the aerial images R1 and R2 including the object (second aerial image R2) floating in the background (first aerial image R1).

As illustrated in FIG. 1, the optical system 3 may include the first concave mirror 31 and the second concave mirror 32.

The first concave mirror 31 is located on the optical paths of the image light L1 and the image light L2 emitted from the display 2. The first concave mirror 31 reflects each of the image light L1 and the image light L2 emitted from the display 2 in a corresponding direction different from the direction toward the display 2. The first concave mirror 31 may include an adjuster that adjusts the spatial arrangement of the first concave mirror 31 with respect to the display 2 (e.g., the distance from a display surface 2a and the tilt angle with respect to the display surface 2a). The adjuster may include, for example, a support such as a rod located on a rear surface of the first concave mirror 31, a shaft located on the support to rotate the support and the first concave mirror 31, and a slider to translate the support and the first concave mirror 31. The adjuster may be driven manually, or electrically by, for example, a stepping motor.

The second concave mirror 32 is located on the optical paths of the image light L1 and the image light L2 reflected from the first concave mirror 31. The second concave mirror 32 reflects, in a direction different from the direction toward the first concave mirror 31, the first image light L1 reflected from the first concave mirror 31 to form the first aerial image R1 as a real image. The second concave mirror 32 reflects, in a direction different from the direction toward the first concave mirror 31, the second image light L2 reflected from the first concave mirror 31 to form the second aerial image R2 as a real image. The second concave mirror 32 may include an adjuster that adjusts a spatial arrangement of the second concave mirror 32 with respect to the first concave mirror 31 (e.g., the distance from the first concave mirror 31 and the tilt angle with respect to the first concave mirror 31). The adjuster in the second concave mirror 32 may have the same structure as or a similar structure to the adjuster in the first concave mirror 31.

In the aerial image display device 1, the optical system 3 includes no optical element (e.g., a beam splitter or a polarizing filter) that partially transmits the image light L1 and the image light L2. The first image light L1 and the second image light L2 reflected from the first concave mirror 31 thus propagate only through a space between the first concave mirror 31 and the second concave mirror 32. This can thus reduce the likelihood of lowering the luminance of the aerial images R1 and R2. The aerial image display device 1 can lower the luminance of the first image displayed on the first display surface 21a and the luminance of the second image displayed on the second display surface 22a while sufficiently maintaining the luminance of each of the aerial images R1 and R2. This can reduce the power consumption of the aerial image display device 1.

The first concave mirror 31 includes a reflective surface 31a. The second concave mirror 32 includes a reflective surface 32a. The first concave mirror 31 may be a freeform concave mirror including the reflective surface 31a as a freeform surface. The second concave mirror 32 may be a freeform concave mirror including the reflective surface 32a as a freeform surface. The first concave mirror 31 and the second concave mirror 32 that are freeform concave mirrors may respectively include the reflective surfaces 31a and 32a shaped appropriately to reduce distortion of the first aerial image R1 and the second aerial image R2.

Each of the reflective surfaces 31a and 32a as a freeform surface may be an XY polynomial surface (also referred to as an SPS XYP surface) defined by Formulas 1 and 2 below. The XY polynomial surface is expressed by polynomials of up to the tenth degree to be added to a conic reference surface. In Formulas 1 and 2, the sum of m and n is thus less than or equal to 10. In Formula 1, z is the sag of a surface parallel to a Z-axis (also referred to as the optical axis), c is a vertex curvature, k is a conic constant, r satisfies $r^2 = x^2 + y^2$, and $C_j$ is a coefficient of the monomial $x^m y^n$.

$$z = \frac{cr^2}{1 + \sqrt{1 - (1+k)c^2 r^2}} + \sum_{j=2}^{66} C_j x^m y^n \qquad (1)$$

$$j = \frac{(m+n)^2 + m + 3n}{2} + 1 \qquad (2)$$

As illustrated in FIG. 1, the aerial image display device 1 may include a control device 9. The control device 9 is connected to each of the components of the aerial image display device 1 to control the component. The control device 9 controls the display 2. For example, the control device 9 may turn on and off the display 2, transmit an image signal to the display 2, and adjust the luminance, chromaticity, or frame frequency of images. For the display 2 including a heat dissipator or a cooling member, the control device 9 may adjust the temperature of the heat dissipator or the cooling member. The control device 9 may control the adjusters in the first concave mirror 31 and the second concave mirror 32.

The control device 9 may include one or more processors. The processors may include a general-purpose processor that reads a specific program to perform a specific function and a processor dedicated to specific processing. The dedicated processor may include an application specific integrated circuit (ASIC). The processors may include a programmable logic device (PLD). The PLD may include a field-programmable gate array (FPGA). The control device 9 may be a system on a chip (SoC) or a system in a package (SiP) in which one or more processors cooperate with one another.

In the aerial image display device 1, the reflective surface 31a of the first concave mirror 31 has a curvature Sa1, and the reflective surface 32a of the second concave mirror 32 has a curvature Sa2. The curvature Sa1 may be greater than the curvature Sa2. With the curvature Sa1 being greater, the first concave mirror 31 that reflects each of the image light L1 and the image light L2 emitted from the display 2 in a corresponding direction different from the direction toward the display 2 can be located closer to the display 2. This reduces the space occupied by the display 2 and the optical system 3, thus reducing the size of the aerial image display device 1. The size of the aerial image display device 1 is reduced to reduce the optical path lengths of the image light L1 and the image light L2 between the display surface 2a of the display 2 and the reflective surface 32a of the second concave mirror 32, thus reducing the loss of the image light L1 and the image light L2 due to, for example, unintended scatter or interference. The aerial image display device 1 can thus have higher display quality.

As illustrated in FIG. 4, the curvature Sa1 of the first concave mirror 31 is defined by a value of $D_{MAX}/H$, where $D_{MAX}$ is a maximum value of a length (also referred to as a maximum depth) in the direction along the optical axis OA between a point on the reflective surface 31a and a line segment LS, and the line segment LS has a length of $2 \times H$. The line segment LS includes the central axis of the reflective surface 31a and connects both ends of the reflective surface 31a in a cross section taken along the optical axis of image light L incident on the first concave mirror 31. A maximum value of $D_{MAX}/H$ among the values obtained at different cross-sectional positions may be defined as the curvature Sa1. The curvature Sa2 is also defined in the same manner as or in a similar manner to the curvature Sa1.

As illustrated in FIG. 2, the optical system 3 may include the first concave mirror 31, a convex mirror 33, and the second concave mirror 32.

The first concave mirror 31 is located on the optical paths of the image light L1 and the image light L2 emitted from the display 2. The first concave mirror 31 reflects each of the image light L1 and the image light L2 emitted from the display 2 in a corresponding direction different from the direction toward the display 2. The first concave mirror 31 may include an adjuster that adjusts the spatial arrangement of the first concave mirror 31 with respect to the display 2 (e.g., the distance from the display 2 and the tilt angles with respect to the first display surface 21a and the second display surface 22a). The adjuster may be the same as or similar to the adjuster described above.

The convex mirror 33 is located on the optical paths of the image light L1 and the image light L2 reflected from the first concave mirror 31. The convex mirror 33 reflects each of the image light L1 and the image light L2 reflected from the first concave mirror 31 in a corresponding direction different from the direction toward the first concave mirror 31. The convex mirror 33 may include an adjuster that adjusts the spatial arrangement of the convex mirror 33 with respect to the first concave mirror 31 (e.g., the distance from the first concave mirror 31 and the tilt angle with respect to the first concave mirror 31). The adjuster may be the same as or similar to the adjuster described above. The adjuster in the convex mirror 33 may be controlled by the control device 9.

The second concave mirror 32 is located on the optical paths of the image light L1 and the image light L2 reflected from the convex mirror 33. The second concave mirror 32 reflects, in a direction different from the direction toward the convex mirror 33, the first image light L1 reflected from the convex mirror 33 to form the first aerial image R1 as a real image. The second concave mirror 32 reflects, in a direction different from the direction toward the convex mirror 33, the second image light L2 reflected from the convex mirror 33 to form the second aerial image R2 as a real image. The second concave mirror 32 may include an adjuster that adjusts the spatial arrangement of the second concave mirror 32 with respect to the convex mirror 33 (e.g., the distance from the convex mirror 33 and the tilt angle with respect to the convex mirror 33). The adjuster may be the same as or similar to the adjuster described above.

The first concave mirror 31 includes the reflective surface 31a. The convex mirror 33 includes the reflective surface 33a. The second concave mirror 32 includes the reflective surface 32a. The first concave mirror 31 and the second concave mirror 32 may be freeform concave mirrors respectively including the reflective surface 31a and the reflective surface 32a each having a shape expressed by the above Formulas 1 and 2. The convex mirror 33 may be a freeform convex mirror including the reflective surface 33a having a shape expressed by the above Formulas 1 and 2. In this case, the reflective surfaces 31a, 33a, and 32a having appropriately designed shapes can reduce distortion of the first aerial image R1 and the second aerial image R2.

The optical system 3 including the three mirrors can increase flexibility in spatially arranging the display 2 and the second concave mirror 32 with respect to each other. This allows each of the tilt angles of the first display surface 21a and the second display surface 22a with respect to the second concave mirror 32 to be 90° or a degree close to 90°, thus reducing the likelihood that the image light L1 and the image light L2 emitted from the display 2 propagate directly toward the second concave mirror 32. This can also reduce the likelihood that the user 5 views a ghost image or a virtual image formed from the image light L1 and the image light L2 unintendedly reflected from the second concave mirror 32. The aerial image display device 1 can thus have higher display quality.

In the aerial image display device 1, the reflective surface 31a of the first concave mirror 31 has the curvature Sa1, the reflective surface 33a of the convex mirror 33 has a curvature Sb, and the reflective surface 32a of the second concave mirror 32 has the curvature Sa2. The curvature Sa1 may be greater than the curvature Sa2, and the curvature Sa2 may be greater than the curvature Sb. The curvatures Sa1, Sb, and Sa2 are defined as described above. With the curvature Sa1 greater than the curvature Sa2 and the curvature Sb, the first concave mirror 31 that reflects each of the image light L1 and the image light L2 emitted from the display 2 in a corresponding direction different from the direction toward the display 2 can be located closer to the display 2. This reduces the space occupied by the display 2 and the optical system 3, thus reducing the size of the aerial image display device 1. The size of the aerial image display device 1 is reduced to reduce the optical path lengths of the image light L1 and the image light L2 between the display 2 and the second concave mirror 32, thus reducing the loss of the image light L1 and the image light L2 due to, for example, unintended scatter or interference. The aerial image display device 1 can thus have higher display quality.

The convex mirror 33 easily increases divergence of the image light L1 and the image light L2 and thus easily increases distortion of the aerial images R1 and R2. With the curvature Sb smaller than the curvature Sa1 and the curvature Sa2, the aerial image display device 1 can reduce an increase in the distortion of the aerial images R1 and R2 caused by the convex mirror 33. The aerial images R1 and R2 thus have higher display quality. For the convex mirror 33 including the reflective surface 33a having the relatively small curvature Sb, the image light L1 and the image light L2 reflected from the convex mirror 33 can have reduced divergence. This can reduce an increase in the size of the second concave mirror 32 for reflecting the image light L1 and the image light L2 reflected from the convex mirror 33 and thus reduce the size of the aerial image display device 1. The size of the aerial image display device 1 is reduced to reduce the optical path lengths of the image light L1 and the image light L2 between the display 2 and the second concave mirror 32, thus reducing the loss of the image light L1 and the image light L2 due to, for example, unintended scatter or interference. The aerial image display device 1 can thus have higher display quality.

The first image light L1 and the second image light L2 reflected from the first concave mirror 31 may propagate only through a space between the first concave mirror 31 and the convex mirror 33. The first image light L1 and the second image light L2 reflected from the convex mirror 33 may propagate only through a space between the convex mirror 33 and the second concave mirror 32. The aerial image display device 1 can thus avoid lowering the luminance of the aerial images R1 and R2. The aerial image display device 1 can lower the luminance of the first image displayed on the first display surface 21a and the luminance of the second image displayed on the second display surface 22a while sufficiently maintaining the luminance of the aerial images R1 and R2. This can reduce the power consumption of the aerial image display device 1.

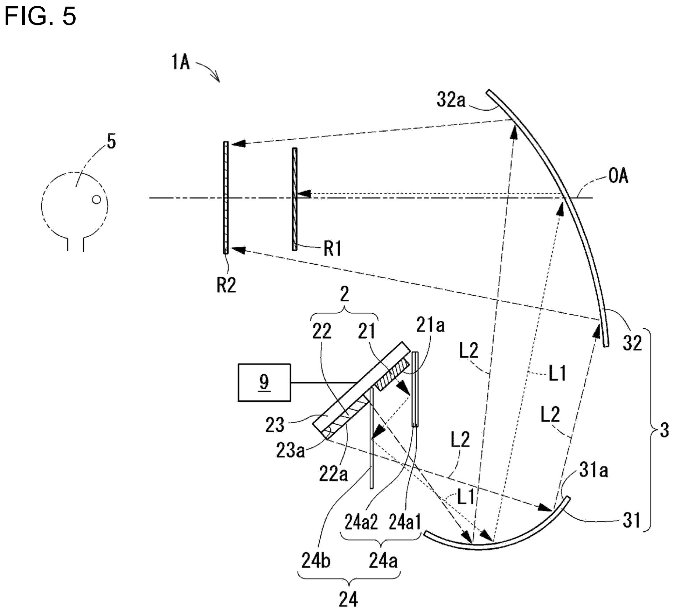

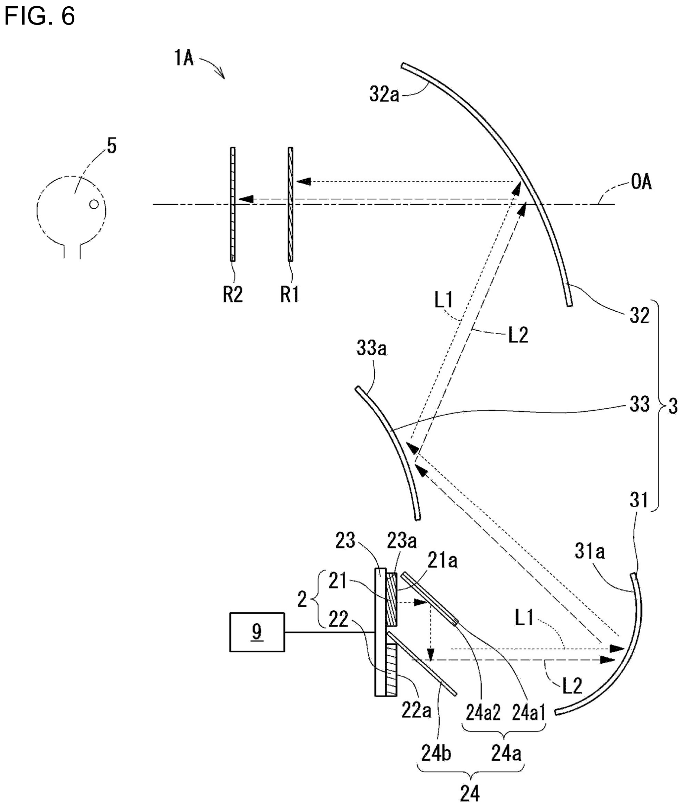

An aerial image display device according to another embodiment of the present disclosure will now be described. FIG. 5 is a cross-sectional view of an example of the aerial image display device according to the other embodiment of the present disclosure, illustrating its main components. FIG. 6 is a cross-sectional view of another example of the aerial image display device in FIG. 5, illustrating its main components. An aerial image display device 1A according to the present embodiment includes the same structure as or similar structure to the aerial image display device 1 according to the above embodiment except for the display. The same structure will not be described.

In the present embodiment, the aerial image display device 1A includes a display 2 and an optical system 3. The display 2 includes a first display unit 21 and a second display unit 22, a substrate 23, and an optical superimposition member 24.

The substrate 23 is made of, for example, a glass material, a ceramic material, a resin material, a metal material, or a semiconductor material. The substrate 23 includes a first main surface (first surface) 23a facing the optical system 3 (first concave mirror 31).

The first display unit 21 and the second display unit 22 are located on the first surface 23a of the substrate 23. The first display unit 21 includes a first display surface 21a. The first display unit 21 emits, from the first display surface 21a, first image light L1 in a direction substantially perpendicular to the first surface 23a. The second display unit 22 includes a second display surface 22a. The second display unit 22 emits, from the second display surface 22a, second image light L2 in a direction substantially perpendicular to the first surface 23a. The first display unit 21 emits the first image light L1 with S-polarization. The second display unit 22 emits the second image light L2 with S-polarization.

The first display unit 21 and the second display unit 22 may each be a portion of a transmissive display (e.g., a first display area or a second display area), or may each be a portion of a self-luminous display. In this case, the first display unit 21 and the second display unit 22 can have, for example, different display images or different levels of luminance in a single display. One of the first display unit 21 or the second display unit 22 may be a transmissive display, and the other of the first display unit 21 or the second display unit 22 may be a self-luminous display.

The optical superimposition member 24 superimposes the first image light L1 emitted from the first display unit 21 and the second image light L2 emitted from the second display unit 22 on each other. The optical superimposition member 24 includes a first optical element 24a and a second optical element 24b.

The first optical element 24a is on an optical path of the first image light L1 emitted from the first display surface 21a of the first display unit 21. The first optical element 24a at least partially reflects the first image light L1 emitted from the first display surface 21a toward the second optical element 24b. The first optical element 24a may be a reflective quarter-wave plate including a plane mirror 24a1 and a quarter-wave plate 24a2 on a reflective surface of the plane mirror 24a1. The reflective quarter-wave plate can reflect S-polarized light incident on the reflective quarter-wave plate and can convert the S-polarized light into P-polarized light.

The second optical element 24b is on an optical path of the first image light L1 reflected from the first optical element 24a and on an optical path of the second image light L2 emitted from the second display surface 22a of the second display unit 22. The second optical element 24b at least partially reflects the first image light L1 reflected from the first optical element 24a toward the optical system 3 (first concave mirror 31). The second optical element 24b at least partially transmits the second image light L2 emitted from the second display surface 22a of the second display unit 22 toward the optical system 3 (first concave mirror 31). The second optical element 24b may be a transmissive-reflective polarizing plate.

The transmissive-reflective polarizing plate may be a wire-grid polarizer including a light transmissive substrate and multiple metal wires (also referred to as a metal nano wire grid) on a surface of the light transmissive substrate. The light transmissive substrate may be, for example, a triacetyl cellulose (TAC) film, a polyethylene terephthalate (PET) film, or a cycloolefin polymer (COP) film. The metal wires may be made of, for example, a metal material such as aluminum, chromium, or titanium oxide. The wire grid polarizer transmits a light component oscillating in a direction perpendicular to the grid (slits) and reflects a light component oscillating in a direction parallel to the grid (slits).

The second optical element 24b can reflect the first image light L1 (P-polarized light) reflected from the first optical element 24a with a relatively high reflectivity. The second optical element 24b can transmit the second image light L2 (S-polarized light) emitted from the second display unit 22 with a relatively high transmittance. The second optical element 24b can reflect the first image light L1 (P-polarized light) reflected from the first optical element 24a with a reflectivity of about 60 to 90%. The second optical element 24b transmits the second image light L2 (S-polarized light) emitted from the second display unit 22 with a transmittance of about 60 to 90%.

The first image light L1 is reflected from the first optical element 24a, reflected from the second optical element 24b, and travels toward the optical system 3 (first concave mirror 31). The second image light L2 is transmitted through the second optical element 24b and travels toward the optical system 3 (first concave mirror 31). In other words, the display 2 has the length of the first optical path P1 from the first display unit 21 to the optical system 3 different from the length of the second optical path P2 from the second display unit 22 to the optical system 3.

The optical system 3 includes the same components as or similar components to the optical system 3 in the aerial image display device 1. The first aerial image R1 and the second aerial image R2 are at different positions in the direction along the optical axis OA and overlap each other in the field of view of the user 5.

The aerial image display device 1A can cause the first image light L1 and the second image light L2 to be emitted from a single display, and can thus use the first image light L1 more efficiently. This can increase the luminance of the first aerial image R1. The control device 9 may control at least one of the luminance of the first image or the luminance of the second image to cause the second aerial image R2 to have higher luminance than the first aerial image R1. This allows the user 5 to view the aerial images R1 and R2 with an improved sense of depth and an improved sense of floating. For the first display unit 21 and the second display unit 22 being liquid crystal displays, the luminance of the first image and the luminance of the second image may be controlled through local dimming control of the backlight or grayscale control of the liquid crystal panels. For the first display unit 21 and the second display unit 22 being self-luminous displays, the luminance of the first image and the luminance of the second image may be controlled by controlling the levels of emission luminance of the multiple self-luminous elements. The display 2 may be configured to cause the first display unit 21 to emit P-polarized first image light L1 and the second display unit 22 to emit P-polarized second image light L2. In this case, the first image light L1 and the second image light L2 can be used more efficiently by changing the orientation of the transmission axis of the second optical element 24b.

The first display unit 21 may be adjacent to the second display unit 22 on the first surface 23a. The first display unit 21 may be at any position with respect to the second display unit 22. The position and the size of the first aerial image R1 can be changed by the change of the position of the first display unit 21 relative to the second display unit 22. The first display surface 21a and the second display surface 22a may have different sizes. The first display surface 21a may be larger or smaller than the second display surface 22a. When the first display surface 21a is larger than the second display surface 22a, the first aerial image R1 can be larger than the second aerial image R2 in the field of view of the user 5. This allows, for example, the user 5 to view the aerial images R1 and R2 including the object (second aerial image R2) floating in the background (first aerial image R1). This improves the sense of floating of the aerial image R2.

As illustrated in FIG. 5, the optical system 3 may include the first concave mirror 31 and the second concave mirror 32. In the aerial image display device 1A, the reflective surface 31a of the first concave mirror 31 has a curvature Sa1, and the reflective surface 32a of the second concave mirror 32 has a curvature Sa2. In this case, the curvature Sa1 may be greater than the curvature Sa2. This structure produces the same effects as or similar effects to the structure in FIG. 1 described above.

As illustrated in FIG. 6, the optical system 3 may include the first concave mirror 31, the convex mirror 33, and the second concave mirror 32. This structure produces the same effects as or similar effects to the structure in FIG. 2 described above.

For the optical system 3 including the first concave mirror 31, the convex mirror 33, and the second concave mirror 32, in the aerial image display device 1A, the reflective surface 31a of the first concave mirror 31 has a curvature of Sa1, the reflective surface 33a of the convex mirror 33 has a curvature of Sb, and the reflective surface 32a of the second concave mirror 32 has a curvature Sa2. The curvature Sa1 may be greater than the curvature Sa2, and the curvature Sa2 may be greater than the curvature Sb. This structure produces the same effects as or similar effects to the structure in FIG. 2 described above.

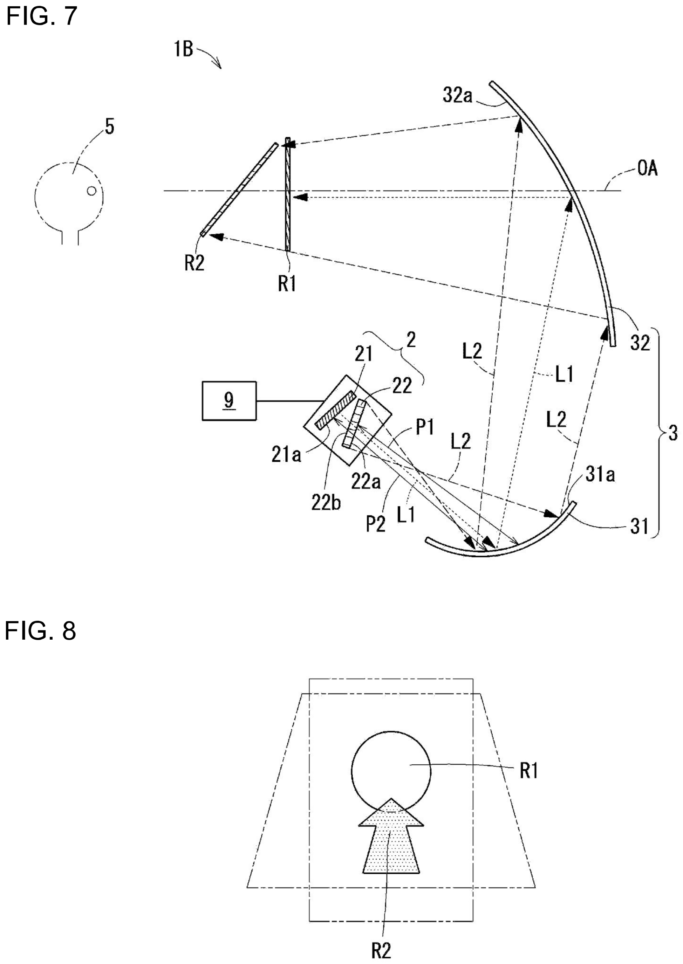

An aerial image display device according to another embodiment of the present disclosure will now be described. FIG. 7 is a cross-sectional view of the aerial image display device according to the embodiment of the present disclosure, illustrating its main components. FIG. 8 is a front view of an example of an aerial image viewed by the user of the aerial image display device in FIG. 7. An aerial image display device 1B according to the present embodiment includes the same structure as or similar structure to the aerial image display device 1 according to the above embodiment except for the display. The same structure will not be described.

In the present embodiment, the aerial image display device 1B includes a display 2 and an optical system 3. The display 2 includes a first display unit 21 and a second display unit 22.

The first display unit 21 includes a first display surface 21a. The first display unit 21 displays an image with propagating first image light L1 on the first display surface 21a. In other words, the first display unit 21 emits the first image light L1 from the first display surface 21a. The second display unit 22 includes a second display surface 22a and a rear surface 22b opposite the second display surface 22a. The second display unit 22 displays an image with propagating second image light L2 on the second display surface 22a. In other words, the second display unit 22 emits the second image light L2 from the second display surface 22a. The first image light L1 and the second image light L2 may be hereafter referred to as image light L1 and image light L2. An image displayed on the first display surface 21a may be referred to as a first image. An image displayed on the second display surface 22a may be referred to as a second image.

The first display unit 21 includes the first display surface 21a located adjacent to the rear surface 22b of the second display unit 22 to face the rear surface 22b of the second display unit 22. The first display unit 21 emits the first image light L1 toward the rear surface 22b of the second display unit 22. As illustrated in FIG. 7, the second display surface 22a is inclined with respect to the first display surface 21a.

The first display unit 21 may be a transmissive display or a self-luminous display. The second display unit 22 is a transparent display.

The first image light L1 emitted from the first display unit 21 is transmitted through the second display unit 22 and travels toward the optical system 3 (first concave mirror 31). The second image light L2 emitted from the second display unit 22 travels directly toward the optical system 3 (first concave mirror 31). In other words, the display 2 has the length of the first optical path P1 from the first display unit 21 to the optical system 3 different from the length of the second optical path P2 from the second display unit 22 to the optical system 3.

The optical system 3 includes the same components as or similar components to the optical system 3 in the aerial image display device 1. The first aerial image R1 and the second aerial image R2 are at different positions in the direction along the optical axis OA and overlap each other in the field of view of the user 5.

The aerial image display device 1B can display the first aerial image R1 and the second aerial image R2 inclined with respect to the first aerial image R1. As illustrated in FIG. 8, the aerial image display device 1B simultaneously displays the first aerial image R1 with the image surface directly facing the user 5 (with the image surface substantially perpendicular to the gaze direction of the user 5) and the second aerial image R2 with the image surface inclined with respect to the first aerial image R1. This allows the user 5 to view the aerial images R1 and R2 including the first aerial image R1 as the background and the second aerial image R2 having the sense of depth. In other words, the first aerial image R1 with the image surface directly facing the user 5 and the second aerial image R2 with the image surface inclined with respect to the first aerial image R1 are simultaneously displayed to enhance the sense of depth of the second aerial image R2. The aerial image display device 1B can provide the user 5 with a new visual experience using the multiple aerial images R1 and R2.

In the aerial image display device 1B, the reflective surface 31a of the first concave mirror 31 has a curvature Sa1, and the reflective surface 32a of the second concave mirror 32 has a curvature Sa2. The curvature Sa1 may be greater than the curvature Sa2. This structure produces the same effects as or similar effects to the structure in FIG. 1 described above.

The optical system 3 may include the first concave mirror 31, the convex mirror 33, and the second concave mirror 32 (refer to FIG. 2). This structure produces the same effects as or similar effects to the structure in FIG. 2 described above.

For the optical system 3 including the first concave mirror 31, the convex mirror 33, and the second concave mirror 32, in the aerial image display device 1B, the reflective surface 31a of the first concave mirror 31 has a curvature Sa1, the reflective surface 33a of the convex mirror 33 has a curvature Sb, and the reflective surface 32a of the second concave mirror 32 has a curvature Sa2. The curvature Sa1 may be greater than the curvature Sa2, and the curvature Sa2 may be greater than the curvature Sb. This structure produces the same effects as or similar effects to the structure in FIG. 2 described above.

The aerial image display devices 1, 1A, and 1B allow operating aerial images with a contactless operation without touching, for example, a button, and may thus be used in, but not limited to, products in various fields as described below. Examples of such products include a communication device for communication or conversations using aerial images, a medical interview device that allows doctors to interview patients using aerial images, a navigation device and a driving control device for vehicles such as automobiles, an order reception and registration device used in, for example, shops, an operational panel used in, for example, buildings or elevators, a learning device for teaching or learning classes using aerial images, an office device for business communication or instructions using aerial images, a gaming device used for playing games using aerial images, a projector for projecting images on the ground or walls in, for example, amusement parks or game arcades, a simulation device for simulation using aerial images in, for example, universities or medical organizations, a large display for displaying prices and other information in, for example, markets or stock exchanges, and an image watching device used for watching aerial images.

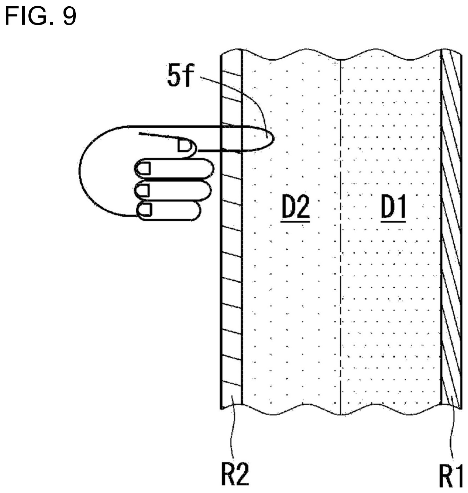

FIG. 9 is a partial cross-sectional view of an aerial image of a contactless input device using the aerial image display device 1, 1A, or 1B according to one or more embodiments of the present disclosure. The contactless input device includes a detector that detects the position of a part of the body of the user 5 (e.g., a fingertip 5f of the user 5). The contactless input device determines, based on the detection results from the detector, whether the fingertip 5f is in an area adjacent to the first aerial image R1 (area D1 in FIG. 9) or in an area adjacent to the second aerial image R2 (area D2 in FIG. 9) between the first aerial image R1 and the second aerial image R2. When the fingertip 5f is in the area D2, the contactless input device performs an operation based on a display of the second aerial image R2. When the fingertip 5f is in the area D1, the contactless input device performs an operation based on a display of the first aerial image R1. The contactless input device using the aerial image display devices 1, 1A, or 1B allows the user 5 to view the aerial images R1 and R2 having the sense of depth and the sense of floating, thus allowing various operations. This structure with higher recognition of the aerial images R1 and R2 can reduce the likelihood of an incorrect operation.

In the aerial image display device according to one or more embodiments of the present disclosure, the second aerial image is closer to the user than the first aerial image, and the first aerial image and the second aerial image overlap each other in the field of view of the user. The user thus views the second aerial image as being located frontward from the first aerial image (closer to the user). This improves the sense of depth of the aerial image and the sense of floating that causes the aerial image to appear floating in the space. The aerial image display device allows the user to view the aerial image with high viewability using the optical system for displaying the first aerial image and the second aerial image not including additional optical elements, such as a beam splitter, a polarizer, and a quarter-wave plate.

Although one or more embodiments of the present disclosure have been described in detail, the present disclosure is not limited to the embodiments described above, and may be changed or varied in various manners without departing from the spirit and scope of the present disclosure.

The aerial image display device according to one or more embodiments of the present disclosure may have aspects (1) to (16) described below.

(1) An aerial image display device, comprising:

a display including a first display unit configured to emit first image light and a second display unit configured to emit second image light; and
at least one optical system configured to form a first aerial image as a real image from the first image light and to form a second aerial image as a real image from the second image light,
wherein the display has a length of a first optical path from the first display unit to the at least one optical system different from a length of a second optical path from the second display unit to the at least one optical system, and the second aerial image is closer to a user than the first aerial image, and the first aerial image and the second aerial image overlap each other in a field of view of the user.

(2) The aerial image display device according to aspect (1), wherein
the first aerial image and the second aerial image have different sizes when viewed from the user.
(3) The aerial image display device according to aspect (2), wherein
the first aerial image is larger than the second aerial image.
(4) The aerial image display device according to any one of aspects (1) to (3), wherein

the second aerial image has higher luminance than the first aerial image.

(5) The aerial image display device according to any one of aspects (1) to (4), wherein the second aerial image has a higher grayscale than the first aerial image.

(6) The aerial image display device according to any one of aspects (1) to (5), wherein the second aerial image has a higher resolution than the first aerial image.

(7) The aerial image display device according to any one of aspects (1) to (6), wherein the first aerial image and the second aerial image are videos, and the second aerial image has a higher moving speed than the first aerial image.

(8) The aerial image display device according to any one of aspects (1) to (7), wherein

the display includes a substrate including a first surface, the first display unit, the second display unit, and an optical superimposition member configured to superimpose the first image light and the second image light on each other, and

the first display unit and the second display unit are located on the first surface.

(9) The aerial image display device according to aspect (8), wherein the optical superimposition member includes a reflective quarter-wave plate configured to reflect the first image light emitted from the first display unit, and a transmissive-reflective polarizing plate configured to superimpose the first image light reflected from the reflective quarter-wave plate and the second image light emitted from the second display unit on each other.

(10) The aerial image display device according to aspect (1), wherein the second display unit is a transparent display and is located on the first optical path to have the second optical path to be parallel to the first optical path.

(11) The aerial image display device according to any one of aspects (1) to (10), wherein the at least one optical system includes

a first concave mirror configured to reflect each of the first image light and the second image light emitted from the display in a corresponding direction different from a direction toward the display, and

a second concave mirror configured to reflect each of the first image light and the second image light reflected from the first concave mirror in a corresponding direction different from a direction toward the first concave mirror and form the first aerial image from the first image light and the second aerial image from the second image light.

(12) The aerial image display device according to aspect (11), wherein each of the first concave mirror and the second concave mirror is a freeform concave mirror.

(13) The aerial image display device according to aspect (11) or aspect (12), wherein the first image light and the second image light reflected from the first concave mirror propagate only through a space between the first concave mirror and the second concave mirror.

(14) The aerial image display device according to any one of aspects (1) to (10), wherein the at least one optical system includes

a first concave mirror configured to reflect each of the first image light and the second image light emitted from the display in a corresponding direction different from a direction toward the display,

a convex mirror configured to reflect each of the first image light and the second image light reflected from the first concave mirror in a corresponding direction different from a direction toward the first concave mirror, and

a second concave mirror configured to reflect each of the first image light and the second image light reflected from the convex mirror in a corresponding direction different from a direction toward the convex mirror and form the first aerial image from the first image light and the second aerial image from the second image light.

(15) The aerial image display device according to aspect (14), wherein each of the first concave mirror and the second concave mirror is a freeform concave mirror, and the convex mirror is a freeform convex mirror.

(16) The aerial image display device according to aspect (14) or aspect (15), wherein the first image light and the second image light reflected from the first concave mirror propagate only through a space between the first concave mirror and the convex mirror, and the first image light and the second image light reflected from the convex mirror propagate only through a space between the convex mirror and the second concave mirror.

REFERENCE SIGNS

1, 1A, 1B aerial image display device
2 display
2a display surface
21 first display unit
21a first display surface
22 second display unit
22a second display surface
22b rear surface
23 substrate
23a first main surface (first surface)
24 optical superimposition member
24a first optical element
24a1 plane mirror
24a2 quarter-wave plate
24b second optical element
3 optical system
31 first concave mirror
31a reflective surface
32 second concave mirror
32a reflective surface
33 convex mirror
33a reflective surface
5 user
5f fingertip
9 control device
L1 first image light
L2 second image light
R1 first aerial image
R2 second aerial image

**Claims**

1. An aerial image display device, comprising:

   a display including a first display unit configured to emit first image light and a second display unit configured to emit second image light; and
   at least one optical system configured to form a first aerial image as a real image from the first image light and to form a second aerial image as a real image from the second image light,
   wherein the second aerial image is closer to a user than the first aerial image, and the first aerial image and the second aerial image overlap each other in a field of view of the user.

2. The aerial image display device according to claim 1, wherein
   the first aerial image and the second aerial image have different sizes when viewed from the user.

3. The aerial image display device according to claim 2, wherein
   the first aerial image is larger than the second aerial image.

4. The aerial image display device according to any one of claims 1 to 3, wherein
   the second aerial image has higher luminance than the first aerial image.

5. The aerial image display device according to any one of claims 1 to 4, wherein
   the second aerial image has a higher grayscale than the first aerial image.

6. The aerial image display device according to any one of claims 1 to 5, wherein
the second aerial image has a higher resolution than the first aerial image.

7. The aerial image display device according to any one of claims 1 to 6, wherein
the first aerial image and the second aerial image are videos, and the second aerial image has a higher moving speed than the first aerial image.

8. The aerial image display device according to claim 1, wherein

the display includes a substrate including a first surface, the first display unit, the second display unit, and an optical superimposition member configured to superimpose the first image light and the second image light on each other, and
the first display unit and the second display unit are located on the first surface.

9. The aerial image display device according to claim 8, wherein
the optical superimposition member includes a reflective quarter-wave plate configured to reflect the first image light emitted from the first display unit, and a transmissive-reflective polarizing plate configured to superimpose the first image light reflected from the reflective quarter-wave plate and the second image light emitted from the second display unit on each other.

10. The aerial image display device according to claim 1, wherein
the second display unit is a transparent display and is located on a first optical path to have a second optical path to be parallel to the first optical path.

11. The aerial image display device according to any one of claims 1 to 10, wherein
the at least one optical system includes

a first concave mirror configured to reflect each of the first image light and the second image light emitted from the display in a corresponding direction different from a direction toward the display, and
a second concave mirror configured to reflect each of the first image light and the second image light reflected from the first concave mirror in a corresponding direction different from a direction toward the first concave mirror and form the first aerial image from the first image light and the second aerial image from the second image light.

12. The aerial image display device according to claim 11, wherein
each of the first concave mirror and the second concave mirror is a freeform concave mirror.

13. The aerial image display device according to claim 11, wherein
the first image light and the second image light reflected from the first concave mirror propagate only through a space between the first concave mirror and the second concave mirror.

14. The aerial image display device according to any one of claims 1 to 10, wherein
the at least one optical system includes

a first concave mirror configured to reflect each of the first image light and the second image light emitted from the display in a corresponding direction different from a direction toward the display,
a convex mirror configured to reflect each of the first image light and the second image light reflected from the first concave mirror in a corresponding direction different from a direction toward the first concave mirror, and
a second concave mirror configured to reflect each of the first image light and the second image light reflected from the convex mirror in a corresponding direction different from a direction toward the convex mirror and form the first aerial image from the first image light and the second aerial image from the second image light.

15. The aerial image display device according to claim 14, wherein
each of the first concave mirror and the second concave mirror is a freeform concave mirror, and the convex mirror is a freeform convex mirror.

16. The aerial image display device according to claim 14, wherein
the first image light and the second image light reflected from the first concave mirror propagate only through a space between the first concave mirror and the convex mirror, and the first image light and the second image light reflected from the convex mirror propagate only through a space between the convex mirror and the second concave mirror.

FIG. 1

FIG. 2

FIG. 3

FIG. 4

FIG. 5

FIG. 6

FIG. 7

FIG. 8

FIG. 9

## INTERNATIONAL SEARCH REPORT

| | |
|---|---|
| International application No. | |
| | **PCT/JP2023/044629** |

| | |
|---|---|
| **A. CLASSIFICATION OF SUBJECT MATTER** | |

*G02B 30/56*(2020.01)i; *G09F 9/00*(2006.01)i; *H04N 13/346*(2018.01)i; *H04N 13/361*(2018.01)i
FI:  G02B30/56; G09F9/00 358; H04N13/346; H04N13/361

According to International Patent Classification (IPC) or to both national classification and IPC

| **B. FIELDS SEARCHED** |
|---|

Minimum documentation searched (classification system followed by classification symbols)

G02B30/56; G09F9/00; H04N13/346; H04N13/361

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C. DOCUMENTS CONSIDERED TO BE RELEVANT** |
|---|

| Category* | Citation of document, with indication, where appropriate, of the relevant passages | Relevant to claim No. |
|---|---|---|
| X | WO 2009/136578 A1 (PIONEER CORPORATION) 12 November 2009 (2009-11-12) | 1-3 |
| | paragraphs [0032]-[0036], fig. 10 | |
| Y | | 3-8, 10-13 |
| A | | 9, 14-16 |
| X | WO 2006/061959 A1 (PIONEER CORPORATION) 15 June 2006 (2006-06-15) | 1-2, 7, 10 |
| | paragraphs [0012]-[0024], [0052], fig. 3, 10 | |
| Y | | 3-8, 10-13 |
| A | | 9, 14-16 |
| Y | JP 2019-128726 A (FUJI XEROX CO., LTD.) 01 August 2019 (2019-08-01) | 4-5 |
| | paragraph [0059] | |
| Y | JP 2008-293022 A (KWANGWOON UNIV. RESEARCH INST. FOR INDUSTRY COOPERATION) 04 December 2008 (2008-12-04) | 6 |
| | paragraph [0100], fig. 3 | |

| ✓ Further documents are listed in the continuation of Box C. | ✓ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 January 2024** | **06 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| | International application No. |
|---|---|
| | **PCT/JP2023/044629** |

### C.    DOCUMENTS CONSIDERED TO BE RELEVANT

| Category* | Citation of document, with indication, where appropriate, of the relevant passages | Relevant to claim No. |
|---|---|---|
| Y | WO 2021/111273 A1 (3M INNOVATIVE PROPERTIES COMPANY) 10 June 2021 (2021-06-10)<br>        page 2, line 31 to page 6, line 35, fig. 1 | 8 |
| Y | 谷川潔, 京セラ"高精細 空中ディスプレイ"を体感できる, 3年ぶりにリアル開催の"CEATEC 2022", [online], 18 October 2022 [retrieved on 23 January 2024], Internet: <URL: https://car.watch.impress.co.jp/docs/news/1448469.html>, non-official translation (TANIGAWA, Kiyoshi, "CEATEC 2022" will be held in real life for the first time in three years, where you can experience Kyocera's "high-definition aerial display")<br>        entire text, all drawings | 11-13 |
| P, A | WO 2023/199748 A1 (KYOCERA CORP.) 19 October 2023 (2023-10-19)<br>        entire text, all drawings | 14-16 |

Form PCT/ISA/210 (second sheet) (July 2022)

**INTERNATIONAL SEARCH REPORT**
Information on patent family members

International application No.

**PCT/JP2023/044629**

| Patent document cited in search report | | | Publication date (day/month/year) | Patent family member(s) | | | Publication date (day/month/year) |
|---|---|---|---|---|---|---|---|
| WO | 2009/136578 | A1 | 12 November 2009 | US | 2011/0181949 | A1 | |
| | | | | paragraphs [0048]-[0052], fig. 10 | | | |
| | | | | JP | 2012-137779 | A | |
| | | | | JP | 2012-177922 | A | |
| | | | | JP | 2012-128454 | A | |
| WO | 2006/061959 | A1 | 15 June 2006 | (Family: none) | | | |
| JP | 2019-128726 | A | 01 August 2019 | US | 2019/0228503 | A1 | |
| | | | | paragraphs [0178]-[0180] | | | |
| JP | 2008-293022 | A | 04 December 2008 | US | 2008/0291269 | A1 | |
| | | | | paragraph [0131], fig. 3 | | | |
| | | | | KR | 10-2008-0103407 | A | |
| WO | 2021/111273 | A1 | 10 June 2021 | JP | 2023-505181 | A | |
| | | | | US | 2023/0017066 | A1 | |
| | | | | EP | 4070151 | A4 | |
| WO | 2023/199748 | A1 | 19 October 2023 | (Family: none) | | | |

Form PCT/ISA/210 (patent family annex) (July 2022)

26

**EP 4 644 973 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

Patent documents cited in the description

- JP 2001125506 A